# EUROPÄISCHE PATENTSCHRIFT

(11) **EP 0 316 584 B1**
(45) Veröffentlichungstag und Bekanntmachung des Hinweises auf die Patenterteilung: **13.01.1993**
(21) Anmeldenummer: 88117179.7
(22) Anmeldetag: 15.10.1988
(51) Int. Cl.: G01F 23/28, E03F 7/04

(54) **Reinigungsrohr**
Purging pipe
Tube d'épuration

(30) Priorität: 20.11.1987 DE 3739304
(43) Veröffentlichungstag der Anmeldung: 24.05.1989
(73) Patentinhaber: Kessel, Bernhard, D-85101 Lenting (DE)
(72) Erfinder: Kessel, Bernhard, D-85101 Lenting (DE)
(74) Vertreter: Sasse, Volker, Dipl.-Ing.

(56) Entgegenhaltungen:
- EP-A- 0 229 960
- DE-A- 2 920 199
- DE-A- 3 238 626
- DE-A- 3 437 000
- ELEKTRONIK, Heft 12, 12 Juni 1987, München, R. OMET: "Optoelektronik in der Füllstandsmessung", Seiten 140-142

## Beschreibung

Die Erfindung betrifft ein Reinigungsrohr der im Oberbegriff des Patentanspruchs 1 angegebenen Art.

Ein aus der DE-A- 32 38 626 bekanntes Reinigungsrohr dieser Art weist eine willkürlich absperrbare Rückstauklappe auf, um bei einem Rückstau ein Zurückdrücken von Abwässern zu unterbinden. Eine vom Deckel in den Reinigungsschacht ragende Sonde meldet das Ansteigen des Flüssigkeitspegels, worauf von Hand oder mittels eines Elektromotors die Rückstauklappe geschlossen wird. In der Praxis werden als Sonden Widerstandssonden, kapazitive Näherungsschalter oder mit Magnetfeld arbeitende Schalter benutzt. Diese Sonden sind nachteilig, weil sie wegen einer gegebenen Explosionsgefahr aufgrund des elektrolytischen Abbaus durch Fäkalien nur mit niedriger Spannung betreibbar sind. Sie sind auch empfindlich gegen Umgebungseinflüsse. Ferner neigen sie auch zu Fehlmeldungen, die durch unvermeidbare aber unkritische Festkörper im Abwasser, durch zu hohe Luftfeuchtigkeit oder durch Spritzer und Tropfen ausgelöst werden. Dazu kommt das grundsätzliche Problem, daß ein Rückstau selten auftritt, die Sonde trotzdem gerade dann zuverlässig ansprechen muß. Der große Unsicherheitsfaktor üblicher Sonden macht bei wertvollen und gegen Rückstau zu schützenden Gebäuden andere bauliche Sicherheitsmaßnahmen erforderlich.

Aus der EP-A-0229960 ist eine optische und mit dem Prinzip der internen Totalreflexion arbeitende Flüssigkeitspegelsonde bekannt, die für die Niveaumessung im Vorratstank eingesetzt ist. Ähnlich ausgebildet und für den gleichen Einsatz vorgesehen ist auch die aus der DE-A- 29 20 199 bekannte Sonde. Diese Sonden besitzen eine exakte Schaltschwelle, die auch bei flüchtiger Benetzung, bei Tropfen oder Spritzern erreicht werden kann. Die Folge ist ein nervöses, überempfindliches Ansprechverhalten bei bewegtem Flüssigkeitsspiegel.

Der Erfindung liegt die Aufgabe zugrunde, ein Reinigungsrohr mit einer bei den groben Arbeitsbedingungen in der Abwassertechnik und insbesondere bei fäkalienhaltigen Abwässern störunanfälligen und trotzdem zuverlässig arbeitenden Sonde zu versehen, um die Sicherheit zu erhöhen, bei einem tatsächlichen Rückstau frühzeitig Gegenmaßnahmen ergreifen zu können.

Die gestellte Aufgabe wird mit den im Patentanspruch 1 angegebenen Merkmalen gelöst.

Die mit interner Totalreflexion arbeitende Sonde ist unempfindlich gegen Umgebungsfeuchtigkeit, Temperaturänderungen, chemische Aggression und benötigt eine geringe Versorgungsspannung, so daß die Sicherheitsvorschriften, z.B. bei Explosionsgefahr leicht erfüllt werden. Spritzer, Wellen oder mitgeführte Festkörper führen zu keinem Schaltsignal, da die Reflexion erst durch vollständige Benetzung in beiden Reflexionsbereichen soweit aufgehoben wird, daß ein Schaltsignal entsteht. Dies ist der Fall, wenn ein tatsächlicher Rückstau zum Ansteigen des Flüssigkeitspegels bis auf die kritische Füllstandshöhe führt. Die Wahrscheinlichkeit von Fehlsignalen ist reduziert, da beide Reflexionsbereiche erst ausreichend benetzt werden müssen, hingegen die zufällige Benetzung nur eines Reflexionsbereiches noch zu keinem Signal führt. Die Ansprechgenauigkeit ist bewußt vermindert, jedoch exakt auf einen tatsächlichen Rückstau abgestimmt. Auftreffende Tropfen laufen zum tiefsten Punkt des schräggestellten Sondenkopfes und fallen dort ab, ohne die Totalreflexion in beiden Reflexionsbereichen gleichzeitig aufzuheben. Beim Zurückgehen des Rückstaus wird ein Entwarnungssignal erst dann erzeugt, wenn der Flüssigkeitsspiegel tatsächlich soweit abgesunken ist, daß beide Reflexionsbereiche wieder frei sind. Pendelt der Flüssigkeitsspiegel, z.B. infolge einer Wellenbewegnng, nur in einem engen Bereich, so spricht die Sonde entweder noch nicht an bzw. wird noch kein Entwarnungssignal erzeugt. Auch feuchte, feste Gegenstände im Abwasser, die z.B. gegen den tieferliegenden Reflexionsbereich stoßen, lösen kein Fehlsignal aus. Gegenmaßnahmen bei einem Rückstau bzw. nach Abbau des Rückstaus lassen sich rechtzeitig durchführen, so daß der Schutz des Gebäudes gegen Schäden aus dem Rückstau gegenüber bekannten Reinigungsrohren verbessert ist. Die Verläßlichkeit der Sonde ist gesteigert, d.h. ein unnötiges Absperren des Rückstauverschlusses oder ein frühzeitiges Freigeben findet nicht mehr statt.

Eine zweckmäßige Ausführungsform geht aus Anspruch 2 hervor. Das Material der Linse bleibt über lange Gebrauchsdauer gegen thermische, mechanische und chemische Einflüsse unempfindlich. Die Lichtquelle und das Schaltelement werden gegen eine unmittelbare Berührung mit den Umgebungsmedien abgeschirmt. Es lassen sich eindeutige und gut weiterverarbeitbare Schaltsignale erzeugen, die auch direkt zum Schalten eines Antriebsmotors nutzbar sind.

Die Halbkugelform gemäß Anspruch 3 ist für die interne Totalreflexion mit zwei unterschiedlich hochliegenden Reflexionsbereichen gut geeignet. Die Form hat ferner den Vorteil, daß Tropfen rasch ablaufen und keine ausreichende Benetzung in beiden Reflexionsbereichen herbeiführen.

Der Gesichtspunkt von Anspruch 4 ist wichtig, weil der Höhenabstand zwischen den Reflexionsbereichen wünschenswert groß ist und sich ein zweckmäßig großer Abstand zwischen der Lichtquelle und dem Schaltelement vorsehen läßt.

Bei der Ausführungsform gemäß Anspruch 5 stellt die Schrägstellung des Sondenkopfes sicher, daß die beiden Reflexionsbereiche in deutlich unterschiedlichen Höhenlagen bezüglich der Horizontalen liegen und Tropfen ohne Erzeugung eines Fehlsignals rasch zum tiefsten Punkt des Sondenkopfes ablaufen.

Bei der Ausführungsform gemäß Anspruch 6 ist die Schaltschwelle so eingestellt, daß das Entwarnungssignal erst dann abgegeben wird, wenn beide Reflexionsbereiche nicht mehr benetzt sind.

Die Maßnahmen von Anspruch 7 sind vorteilhaft, weil infrarotes Licht mit geringem Energieaufwand erzeugbar und gegen Fremdeinflüsse besonders unempfindlich ist, und weil eine Einfärbung der Linse etwaige störende Lichteinflüsse mindert.

Die Ausführungsform von Anspruch 8 ist in baulicher Hinsicht zweckmäßig, weil die Sonde kompakt ist und sich praktisch an jeder beliebigen Stelle innerhalb des Reinigungsschachtes unterbringen läßt.

Die Maßnahme gemäß Anspruch 9 ist vorteilhaft, weil das Abschirmglied die Sonde und den Sondenkopf gegen Beschädigungen schützt, die Strömung im Abtastbereich beruhigt und bei turbulenter Strömung das zufällige Benetzen des Sondenkopfes verhindert.

Eine baulich einfache und preiswerte Ausführungsform geht ferner aus Anspruch 10 hervor. Die einzelnen Komponenten des Schaltkreises können auf kleinstem Raum untergebracht werden, was zu kompakten Abmessungen der Sonde beiträgt und Störeinflüsse von außen ausschließt.

Schließlich ist die Ausführungsform gemäß Anspruch 11 vorteilhaft, bei der im Reinigungsschacht wenigstens ein mit einem elektrischen Antriebsmotor koppelbares und zwischen einer Durchgangs- und einer Absperrstellung hin- und herbewegbares Absperrglied angeordnet ist. Das Reinigungsrohr ist eine automatische Sicherheitseinrichtung für ein Gebäude, die bei einem Rückstau selbsttätig absperrt und nach Abbau des Rückstaus selbsttätig den Abfluß freigibt, wenn keine Gefahr mehr für das zu sichernde Gebäude besteht.
[(Fortsetzung auf Seite 8, mit Absatz 3 der ursprünglichen Beschreibung)]

Anhand der Zeichnung wird eine Ausführungsform des Erfindungsgegenstandes erläutert.

Es zeigen:
- Fig. 1: einen Längsschnitt durch ein Reinigungsrohr,
- Fig. 2: ein vergrößertes Detail aus Fig. 1 und
- Fig. 3: ein Blockschaltbild zur Verdeutlichung der Funktion.

Ein Reinigungsrohr 1, insbesondere für fäkalienhaltige Abwässer, weist einen zweckmäßigerweise aus einem Kunststoff gebildeten Grundkörper 2 mit einem nach oben offenen Reinigungsschacht 3 auf, wobei in den Grundkörper 2 ein Zuflußrohrstutzen 4 und ein Abflußrohrstutzen 5 integriert sind. Die Rohrstutzen 4 und 5 könnten auch über herkömmliche Anschlußelemente angeschlossen sein. Der Reinigungsschacht 3 ist oben durch einen abnehmbaren Deckel 6 verschlossen.

In dem Reinigungsschacht 3 ist benachbart zum Zuflußstutzen 4 ein Einsatzteil 7 eingesetzt, das einen Dichtsitz 8 für ein Absperrglied 11 bildet. Im Abstand vom Einsatzteil 7 ist in den Reinigungsschacht 3 ein weiteres Einsatzteil 9 eingesetzt, das einen Dichtsitz 10 für ein weiteres Absperrglied 12 bildet. Die Absperrglieder 11, 12 sind im Bereich des Deckels 6 als schwenkbare Rückstauklappen ausgebildet.

Der Deckel 6 ist mit einem Antriebsmotor 13 für das Absperrglied 11 versehen, der über eine Leitung 14 mit einer strichpunktiert angedeuteten Steuervorrichtung 24 verbunden ist. Das Absperrglied 11 besitzt ein Nockenführungsglied 15, das mit einem Nocken 16 des Antriebsmotors 13 derart zusammenarbeitet, daß das Absperrglied 11 in der dargestellten angehobenen Lage gehalten wird und durch Betätigung des Antriebsmotors 13 in eine Absperrstellung gegen den Dichtsitz 8 bewegt und dagegen gedrückt gehalten werden kann. Für das Absperrglied 12 ist im Deckel 6 ein Nockenelement 17 schwenkbar gelagert, das mit einem Handhebel 18 verschwenkt werden kann, um das Absperrglied 12 entweder in der dargestellten angehobenen Lage zu halten oder gegen den Dichtsitz 10 zu pressen.

Das Reinigungsrohr 1 könnte auch nur mit einem der beiden Absperrglieder 11 oder 12 versehen sein. Wird das Reinigungsrohr 1 für fäkalienhaltige Abwässer benutzt, so sind entsprechend den diesbezüglichen Vorschriften die Absperrglieder 11 und 12 in der normalen Gebrauchslage angehoben. Sie werden nur im Falle eines Rückstaus mit abgesenkt und gegen die Dichtsitze zur Anlage gebracht. Handelt es sich hingegen um ein Reinigungsrohr für normale Abwässer, so können die Absperrglieder 11 und 12 oder nur eines der beiden Absperrglieder bei normalem Betrieb frei schwenkbar gelagert und nur im Falle eines Rückstaus an ihrem Dichtsitz anpreßbar sein.

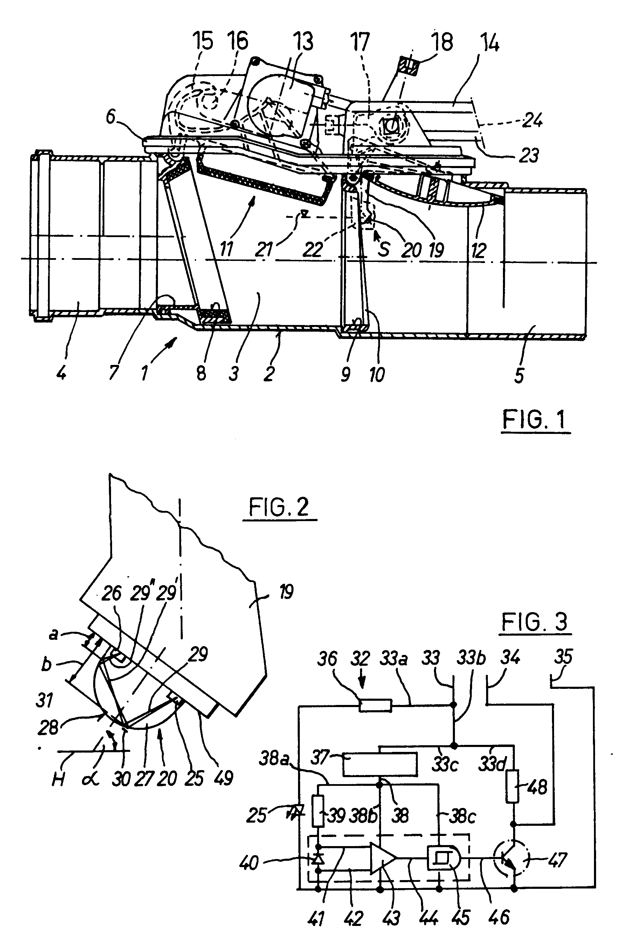

In den Reinigungsschacht 3 ragt vom Deckel 6 aus eine Sonde S, die aus einem fingerartigen Sondenhalter 19 und einem nach unten weisenden Sondenkopf 20 besteht. Der Sondenkopf 20 liegt etwa im oberen Drittel der Höhe des Reinigungsschachtes 3 und dient dazu, bei Auftreten eines Rückstaus eine Füllstandshöhe 21 zu melden, so daß entweder der Antriebsmotor 13 direkt angesteuert wird, das Absperrglied 11 in die Absperrstellung zu bringen oder nur den Rückstau zu melden, so das von Hand mittels des Handhebels 18 das Absperrglied 12 in die Absperrstellung gebracht werden kann. Im Bereich des Sondenkopfes 20 und ggfs. im Gesamtbereich des Sondenhalters 19 ist im Reinigungsschacht 3 eine Abschirmung 22 angeordnet, die zum Schutz des Sondenkopfes 20 dient. Wie Fig. 1 zeigt, ist der Sondenkopf 20 schräg gegen die Rückstaurichtung geneigt. Die Sonde S steht über eine Verbindungsleitung 23 zweckmäßigerweise ebenfalls mit der Steuervorrichtung in signalübertragender und energieversorgender Verbindung.

Gemäß Fig. 2 ist der Sondenkopf 20 am Sondenhalter 19 mit seiner Achse in einem Winkel (α) gegenüber der Horizontalen H geneigt. Der Winkel (α) gebildet von der Senkrechten auf der Grundfläche der Linse und der Horizontalen H, beträgt annähernd 45°. Die Sonde S ist eine optische und mit dem Prinzip der internen Totalreflexion arbeitende Sonde. Für diesen Zweck ist der Sondenkopf 20 mit einer Lichtquelle 25, hier einer Licht emittierenden Diode ausgestattet, die an der Basis einer annähernd halbkugeligen Linse 27 im Abstand von einem Schaltglied in Form eines Opto-Schmitt-Trigger-Chips 26 angeordnet ist. Die Linse 27 ist entweder voll ausgebildet, so daß die Elemente 25 und 26 eingegossen sind. Es ist auch denkbar, die Linse nur als Kugelkalotte mit einem innenliegenden Hohlraum auszubilden. Die Linse 27 muß nicht zwangsweise halbkugelförmig sein, sie könnte auch eine kleinere Kugelkalotte oder eine größere Kugelkalotte als eine Halbkugel bilden. Denkbar ist ferner auch eine andere räumlich gekrümmte Form für die Linse 27. Die mit 28 bezeichnete Außenfläche der Linse 27 ist im Reinigungsschacht 3 (Fig. 1) benetzbar angeordnet. Da sie im oberen Drittel des Reinigungsschachtes 3 liegt, wird sie nur im Falle eines Rückstaus benetzt, der diese Füllstandshöhe 21 erreicht. Die normalen Abwässer fließen im wesentlichen nur am Grund des Reinigungsschachtes unterhalb der Mittelachse, so daß der Sondenkopf 20 durch die normal fließenden Abwässer nicht oder allenfalls durch spritzende Tropfen benetzt wird, die keine Wirkung hervorrufen.

Die Licht emittierende Diode 25 erzeugt einen schräg gerichteten Lichtstrahl 29, der auf einen tiefliegenden ersten Reflexionsbereich 30 an der Außenfläche 28 gerichtet ist. Bei nicht benetzter Außenfläche 28 wird der Lichtstrahl 29 in der dargestellten Weise bei 29' reflektiert und zu einem zweiten Reflexionsbereich 31 an der Außenfläche 28 gelenkt, ehe er dort erneut reflektiert und zum Chip 26 geleitet wird. Von der Basisfläche der Linse 27 hat der erste Reflexionsbereich 30 einen größeren Abstand b als der zweite Reflexionsbereich 31, der nur einen Abstand a von der Basisfläche entfernt ist.

Die Sonde S arbeitet wie folgt:
Bei nicht in Flüssigkeit tauchender Außenfläche 28 der Linse 27 wird der Lichtstrahl 29 in der in Fig. 2 gezeigten Weise total reflektiert und vom Chip 26 registriert, der ein entsprechendes Signal erzeugt. Wird hingegen die Außenfläche 28 zur Gänze mit Flüssigkeit benetzt, liegt also die Linse 27 vollständig in dem feuchten Durchsatz, so wird die Totalreflexion aufgehoben und der Lichtstrahl 29 wird in der Flüssigkeit absorbiert, ohne noch den Chip 26 erreichen zu können. Da es sich hier um eine Digitalanzeige handelt, wird beim Wegbleiben der positiven Anzeige ein negatives Signal erzeugt, das die vollständige Benetzung repräsentiert und damit in der Lage ist, einen Rückstau anzuzeigen, so daß eines oder beide der Absperrglieder 11, 12 in die Schließstellung gebracht werden können, z.B. mittels des Antriebsmotors 13 und/oder des Handhebels 18.

Die Empfindlichkeit des Opto-Schmitt-Trigger-Chip 26 ist so eingestellt, daß bei Benetzung nur im Reflexionsbereich 30 noch ein schwacher Lichtstrahl 29′ reflektiert wird, der noch nicht zum Rückstausignal führt. Erst wenn beide Reflexionsbereiche 30 und 31 benetzt sind, wird die Reflexion total aufgehoben und der Chip 26 erhält keinen Lichtstrahl, so daß das Rückstausignal erzeugt wird.

Fig. 3 verdeutlicht den Schaltkreis 32 für den Sondenkopf 20 der Sonde S. Dieser Schaltkreis 32 ist zweckmäßigerweise in den Sondenhalter 19 bzw. den Sondenkopf 20 baulich integriert und über das Kabel 23 mit der Steuervorrichtung oder einer Schnittstelle 24 verbunden, über die beispielsweise der Antriebsmotor 13 angesteuert werden kann.

Im Schaltkreis 32 zweigt sich eine Versorgungsleitung 33, die an eine Stromquelle angeschlossen ist, in Leitungen 33a und 33b und wiederum in 33c und 33d. Eine Leitung 34 sowie eine Leitung 35 führen im Kabel 23 zur Schnittstelle 24. Die Leitung 33a führt über einen Vorwiderstand 36 zur Licht emittierenden Diode 25 und geht dann in die Leitung 35 über. Die Leitung 33b ist über die Leitung 33c mit einem Spannungsregler 37 verbunden, von dem eine Ausgangsleitung 38 in Leitungen 38a, 38b und 38c aufgezweigt ist, die in den Opto-Schmitt-Trigger-Chip 26 führen. In der Leitung 38a ist vor einer Fotodiode 40 ein Vorwiderstand 39 enthalten. In der Leitung 38b ist ein Verstärker 43 vorgesehen, der mit den Anschlußkontakten der Fotodiode 40 über Leitungen 41 und 42 verbunden ist. Ausgangsseitig führt vom Verstärker 43 eine Leitung 44 zu einem Schmitt-Trigger 45, der in der Leitung 38c enthalten ist. Ausgangsseitig führt vom Schmitt-Trigger 45 schließlich eine Leitung 46 zu einem Schalttransistor 47, der zwischen der Leitung 35 und der Leitung 33d enthalten ist, wobei in der Leitung 33d ein weiterer Widerstand 48 vorgesehen ist. Zwischen dem Widerstand 48 und dem Schalttransistor 47 zweigt die Leitung 34 ab.

Die Linse 27 besteht zweckmäßigerweise aus einem Kunststoff wie Polysolfon und ist gegen mechanische und zahlreiche chemisch aggressive Einflüsse dauerhaft beständig.

Der Schmitt-Trigger 45 ist in der Lage, digitale Signale zu erzeugen, je nachdem, ob die Fotodiode 40 mit Licht beaufschlagt wird oder nicht.

Vorausgesetzt, daß die Fotodiode 40 von der Licht emittierenden Diode 25 aus ordnungsgemäß mit Licht beaufschlagt wird, erzeugt der Schmitt-Trigger 45 ein Ausgangssignal, das den Schalttransistor 47 gesperrt hält. Die Leitung 34 führt einen bestimmten Spannungswert, durch den der Antriebsmotor 13 jedoch nicht zum Schalten veranlaßt wird. Entfällt nun die Lichtbeaufschlagung der Fotodiode 40, so wechselt der Schmitt-Trigger 45 sein Ausgangssignal, wodurch der Schalttransistor 47 auf Durchgang geschaltet und die Leitung 35 mit Spannung versorgt wird, die in der Steuervorrichtung 24 dazu benutzt wird, den Antriebsmotor 13 zum Schließen des Absperrgliedes 11 zu betätigen. Dies ist dann der Fall, wenn die Außenfläche 28 der Linse 27 vollständig benetzt ist, weil sich dadurch der Brechungsindex an der Außenfläche soweit ändert, daß der Lichtstrahl 29 in der Flüssigkeit absorbiert wird und nicht mehr auf den Chip 26 fällt.

Wird die Benetzung der Außenfläche 28 wieder aufgehoben, so wird der Chip 26 wieder mit Licht beaufschlagt, worauf durch die Fotodiode 40 der Schmitt-Trigger 45 wieder zum Erzeugen des ersten Signals veranlaßt wird, das den Schalttransistor 47 sperrt und die Spannung in der Leitung 35 abfallen läßt. Der Antriebsmotor 13 wird dann wieder in die in Fig. 1 gezeigte Stellung zurückgeführt.

Die Schaltung 32 stellt wie auch die Anordnung der Licht emittierenden Diode 25 und des Chips 26 nur eine Möglichkeit von vielen dar. Grundsätzlich läßt sich jede Anordnung aus Lichtquelle und Lichtempfänger für die Sonde S verwenden, bei der beim Ausbleiben des Reflexionslichtes ein Signal erzeugt wird. Auch der Schaltkreis 32 ist nur eine Möglichkeit von vielen. Die Schaltung muß nicht notwendigerweise im Sondenhalter 19 oder im Sondenkopf 20 enthalten sein. Es wäre genauso denkbar, aus Wartungs- und Sicherheitsgründen die Schaltung in die Leistungsschaltung des Antriebsmotors zu integrieren. Da die Schaltung 32 aber ein integrierter Schaltkreis sein kann, der nur wenig Platz beansprucht und funktionssicher ist, ließe er sich einfach an der Basisfläche der Linse 27 unterbringen.

Die Sonde S kann praktisch an jeder Stelle des Reinigungsschachtes 3 untergebracht werden, d.h. entweder an der Unterseite des Deckels, an einem der Einsatzteile oder auch direkt in der Seitenwand des Reinigungsschachtes 3 in genügender Höhe.

## Patentansprüche

1. Reinigungsrohr (1), insbesondere für fäkalienhaltige Abwässer, mit einem Grundkörper (2), in dem zwischen Zu- und Ablaufrohrstutzen (4, 5) ein Reinigungsschacht (3) vorgesehen ist, und mit einer im Reinigungsrohr (1) angeordneten Sonde (S), deren Kopf (20) bei einer im Falle eines Rückstaus auftretenden Füllstandshöhe (21) des zu überwachenden Flüssigkeitspegels frei benetzbar angebracht ist, gekennzeichnet durch folgende Merkmale:
Die Sonde (S) weist am Sondenkopf (20) eine optisch nach dem Prinzip der internen Totalreflexion arbeitende Linse (27) auf,
die Linse (27) weist an ihrer freiliegenden Außenfläche (28) zwei Reflexionsbereiche (30, 31) für im Inneren der Linse (27) von einer Lichtquelle (25) emittiertes und über die beiden Reflexionsbereiche (30, 31) auf ein optoelektronisches Schaltelement (26) gerichtetes Licht auf, und
der Sondenkopf (20) ist derart schräggestellt, daß ein Reflexionsbereich (31) der Linse (27) - bezogen auf die Horizontale (H) - höher liegt als der andere Reflexionsbereich (30).

2. Reinigungsrohr nach Anspruch 1, dadurch gekennzeichnet, daß die Linse (27) aus einem gegen thermische, mechanische und chemisch aggressive Einflüsse weitgehend beständigem Kunststoff, insbesondere Polysolfon, besteht und daß die Linse (27) im Sondenkopf (20) mit ihrer Grundfläche die Lichtquelle (25) und das Schaltelement (26) überdeckt.

3. Reinigungsrohr nach Anspruch 1 oder 2, dadurch gekennzeichnet, daß die Linse (27) annähernd halbkugelig und massiv oder hohl ausgebildet ist.

4. Reinigungsrohr nach Anspruch 1 oder 2, dadurch gekennzeichnet, daß die beiden Reflexionsbereiche (30, 31) an der Außenfläche (28) der Linse (27) unterschiedliche Abstände (a, b) von der Grundfläche (49) aufweisen.

5. Reinigungsrohr nach den Ansprüchen 1 oder 2, dadurch gekennzeichnet, daß die Grundfläche (49) der Linse (27) mit der Horizontalen (H) einen spitzen Winkel (α) von ca. 45° einschließt.

6. Reinigungsrohr nach mindestens einem der Ansprüche 1 bis 5, dadurch gekennzeichnet, daß das Schaltelement (26) ein SchmittTrigger-Chip ist, dessen Schaltschwelle so niedrig eingestellt ist, daß erst bei Benetzung beider Reflexionsbereiche (30, 31) ein Schaltsignal erzeugt wird.

7. Reinigungsrohr nach einem der Ansprüche 1 bis 6, dadurch gekennzeichnet, daß die Lichtquelle (25) eine Infrarot-Diode und daß die Linse (27) vorzugsweise ultraviolett eingefärbt ist.

8. Reinigungsrohr nach einem der Ansprüche 1 bis 7, dadurch gekennzeichnet, daß die Sonde (S) in einem Sondenhalter (19) sitzt, der an dem Deckel (6) des Reinigungsschachtes (3) oder an einem Einsatzteil (9) im Reinigungsschacht (3) oder in der Wand des Reinigungsschachtes (3) angebracht ist, und daß der Sondenhalter (19) fingerförmige Gestalt besitzt.

9. Reinigungsrohr nach einem der Ansprüche 1 bis 8, dadurch gekennzeichnet, daß im Reinigungsschacht (3) ein Abschirmglied (22) für den Sondenkopf (20) vorgesehen ist.

10. Reinigungsrohr nach einem der Ansprüche 1 bis 9, dadurch gekennzeichnet, daß die Lichtquelle (25) und der Schmitt-Trigger-Chip (26) einem elektronischen Schaltkreis (32) eingegliedert sind, in dem die Lichtquelle (25) mit einem Vorwiderstand (36) parallel zum Schmitt-Trigger-Chip (26) und einem diesem vorgesetzten Spannungsregler (37) sowie einem parallelen Schalttransistor (47) angeordnet ist, und daß der Schmitt-Trigger-Chip (26) zueinander parallel eine Fotodiode (40) ein davon angesteuertes Verstärkerglied (43) und einen Schmitt-Trigger (45) zum Ansteuern der Basis des in der Schaltleitung (46) angeordneten Schalttransistors enthält.

11. Reinigungsrohr nach einem der Ansprüche 1 bis 10, dadurch gekennzeichnet, daß im Reinigungsschacht wenigstens ein mit einem elektrischen Antriebsmotor koppelbares und zwischen einer Durchgangs- und einer Absperrstellung hin- und herbewegbares Absperrglied angeordnet ist und daß der elektrische Schaltkreis (32) mit einem derartigen Arbeitsschaltkreis des Antriebsmotors (13) verbunden ist, daß bei Benetzung des Sondenkopfes (20) der Antriebsmotor (13) zum Bewegen oder Halten des Absperrglieds (11) geschaltet wird.

## Claims

1. A purging pipe, in particular for sewage containing faeces, with a base body (2) wherein provision is made between the intake pipe and the outlet pipe (4,5) for a purging shaft (3), and with a probe (S) arranged in the purging pipe (1) whose head (20) is arranged to be freely wettable with a height of fill (21) of the liquid level to be monitored, occurring in the case of any back-water, characterized by the following features:
the probe (S) has at the probe head (20) a lens (27) optically operating according to the internal total reflection principle,
the lens (27) has at its free outer surface (28) two reflection zones (30, 31) for light omitted inside the lens (27) by a light source (25) and directed via the two reflection zones (30, 31) to an optoelectronic circuit element (28), and
the probe head (20) is slanted in such a way that one reflection zone (31) of the lens (27) lies at a higher level - with reference to the horizontal (H) - than the other reflection zone (30).

2. A purging pipe according to claim 1, characterized in that the lens (27) consists of a synthetic material which is largely resistant to thermal, mechanical and chemically aggressive influences, in particular Polysolfon, and that the lens (27) in the probe head (20) covers with its base the light source (25) and the circuit element (28).

3. A purging pipe according to claim 1 or 2, characterized in that the lens (27) is approximately hemispherical and is designed to be solid or hollow.

4. A purging pipe according to claim 1 or 2, characterized in that the two reflection zones (30, 31) on the outer surface (28) of the lens (27) are spaced at different distances (a, b) from the base (49).

5. A purging pipe according to claims 1 or 2, characterized in that the base (49) of the lens (27) forms an acute angle (α) of approximately 45° with the horizontal (H).

6. A purging pipe according to at least one of claims 1 to 5, characterized in that the circuit element (26) is a Schmitt trigger chip whose switching threshold is set so low that a switching signal is only generated when both reflection zones (30, 31) are wetted.

7. A purging pipe according to one of claims 1 to 6, characterized in that the light source (25) is an infrared diode and that the lens (27) is preferably tinted ultraviolet.

8. A purging pipe according to one of claims 1 to 7, characterized in that the probe (S) is seated in a probe holder (19) which is arranged on the lid (6) of the purging shaft (3) or on an insert (9) in the purging shaft (3) or in the wall of the purging shaft (3), and that the probe holder (19) is finger-shaped.

9. A purging pipe according to one of claims 1 to 8, characterized in that in the purging shaft (3), provision is made for a screening element (22) for the probe head (20).

10. A purging pipe according to one of claims 1 to 9, characterized in that the light source (25) and the Schmitt trigger chip (26) are incorporated in an electronic circuit (32) wherein the light source (25) is arranged with a protective resistor (36) in parallel to the Schmitt trigger chip (26) and with a voltage regulator (37) preceding the latter, as well as with a parallel switching transistor (47), and that the Schmitt trigger chip (26) contains in a respectively parallel arrangement, a photodiode (40), an amplifier element (43) controlled thereby and a Schmitt trigger (45) for triggering the base of the switching transistor arranged in the switching line (46).

11. A purging pipe according to one of claims 1 to 10, characterized in that in the purging shaft, there is arranged a shut-off element that can be coupled with an electric drive motor and be moved to and fro between a passing and shutting off position, and that the electric circuit (32) is connected to such an operating circuit of the drive motor (13) that when the probe head (20) is wetted, the drive motor (13) is switched so as to move or hold the shut off-element (11).

## Revendications

1. Tube d'épuration (1), en particulier pour des eaux d'égout chargées de matières fécales, comprenant un corps de base (2) dans lequel un puits d'égout (3) est prévu entre les tubulures d'arrivée et d'écoulement (4, 5), et une sonde (S) disposée dans le tube d'épuration (1) dont la tête (20) est placée de manière à pouvoir être mouillée librement lorsque le niveau de liquide à surveiller atteint une hauteur de remplissage (21) dans le cas d'une retenue, **caractérisé en ce** que la sonde (S) comporte à la tête de sonde (20) une lentille optique (27) qui fonctionne d'après le principe de la réflexion totale interne; que la lentille (27) présente sur sa surface extérieure (28) libre deux zones de réflexion (30, 31) pour de la lumière émise à l'intérieur de la lentille (27) par une source lumineuse (25) et dirigée par l'intermédiaire des deux zones de réflexion (30, 31) vers un élément de commutation optoélectronique (26), et que la tête de sonde (20) est inclinée de telle façon que l'une des zones de réflexion (31) de la lentille (27) se situe - rapporté à l'horizontale (H) - à un niveau plus élevé que l'autre zone de réflexion (30).

2. Tube d'épuration selon la revendication 1, caractérisé en ce que la lentille (27) est constituée d'une matière plastique, en particulier du polysolfone, qui résiste dans une large mesure aux influences thermiques, mécaniques et aux agressions chimiques, et que la lentille (27) dans la tête de sonde (20) recouvre avec sa surface de base la source lumineuse (25) et l'élément de commutation (26).

3. Tube d'épuration selon l'une des revendications 1 ou 2, caractérisé en ce que la lentille (27) présente une forme sensiblement hémisphérique et qu'elle est massive ou creuse.

4. Tube d'épuration selon l'une des revendications 1 ou 2, caractérisé en ce que les deux zones de réflexion (30, 31) sur la surface extérieure (28) de la lentille (27) se trouvent à des distances différentes (a, b) de la surface de base (49).

5. Tube d'épuration selon l'une des revendications 1 ou 2, caractérisé en ce que la surface de base (49) de la lentille (27) forme avec l'horizontale (H) un angle aigu (α) d'environ 45°.

6. Tube d'épuration selon l'une quelconque des revendications 1 à 5, caractérisé en ce que l'élément de commutation (26) est une puce de bascule de Schmitt dont le seuil de commutation est réglé suffisamment bas pour qu un signal de commutation ne soit généré qu'en cas de mouillage des deux zones de réflexion (30, 31).

7. Tube d'épuration selon l'une des revendications 1 à 6, caractérisé en ce que la source lumineuse (25) est une diode infrarouge et que la lentille (27) présente de préférence une coloration ultraviolette.

8. Tube d'épuration selon l'une des revendications 1 à 7, caractérisé en ce que la sonde (S) est montée dans un support de sonde (19) lequel est fixé sur le couvercle (6) du puits d'égout (3) ou sur un insert (9) dans le puits d'égout (3) ou dans la paroi du puits d'égout (3), et que le support de sonde (19) présente une forme de doigt.

9. Tube d'épuration selon l'une des revendications 1 à 8, caractérisé en ce qu'un élément de blindage (22) pour la tête de sonde (20) est prévu dans le puits d'égout (3).

10. Tube d'épuration selon l'une des revendications 1 à 9, caractérisé en ce que la source de lumière (25) et la puce de bascule de Schmitt (26) font partie d'un circuit électronique (32) dans lequel la source lumineuse (25) est montée, avec une résistance série (36), en parallèle avec la puce de bascule de Schmitt (26) et avec un régulateur de tension (37) monté en amont de ladite puce ainsi qu'avec un transistor de commutation (47) monté en parallèle, et que la puce de bascule de Schmitt (26) comprend respectivement montés en parallèle une photodiode (40), un élément amplificateur (43) commandé par celle-ci et une bascule de Schmitt (45) pour la commande de la base du transistor de commutation inséré dans la ligne de commutation (46).

11. Tube d'épuration selon l'une des revendications 1 à 10 caractérisé en ce que dans le puits d'égout est disposé au moins un organe d'arrêt pouvant être couplé avec un moteur d'entraînement électrique et déplacé entre une position de passage et une position de blocage, et que le circuit électrique (32) est couplé avec un circuit de travail du moteur d'entraînement (13) de telle façon que, en cas de mouillage de la tête de sonde (20), le moteur d'entraînement (13) est commuté dans le sens du déplacement ou du maintien de l'organe d'arrêt (11).
